# EUROPÄISCHE PATENTANMELDUNG

(11) **EP 1 826 101 A2**
(43) Veröffentlichungstag der Anmeldung: **29.08.2007**
(21) Anmeldenummer: 07003650.4
(22) Anmeldetag: 22.02.2007
(51) Int. Cl.: B62D 21/14, B62D 27/06

(54) **Aufbau für ein Reisemobil**

(30) Priorität: 24.02.2006 DE 202006003122 U
(71) Anmelder: Laumann, Wilfried, 9320 Arbon (CH)
(72) Erfinder: Laumann, Wilfried, 9320 Arbon (CH)
(74) Vertreter: Engelmann, Kristiana

(57) **Zusammenfassung**

Ein Aufbau für ein Reisemobil (1) weist ein Fahrgestell (2) auf, das endseitig im Bereich von zur Längsmittelebene (M) parallelen Längsholmen (4,5) mit einem durch eine jeweilige Verbindungsvorrichtung (6,7) gehaltenen Anbaugestell (8) versehen ist, dessen aus der Ebene (E) der Längsholme (4,5) nach unten abgesenkte Tragholme (9,10) einen zusätzlichen Nutzraum (N) o. dgl, untergreifen. Erfindungsgemäß ist die jeweilige Verbindungsvorrichtung (6;7) zwischen Längsholm (4,5) und Tragholm (9,10) mit zumindest einem Profilträger (11,11') versehen, der ausgehend vom stirnseitigen Endbereich (12) des Längsholmes (4,5) zu dem einen vertikalen Abstand (A') aufweisenden Tragholm (9,10) hin mit einem einen Schrägungswinkel (W) definierenden Stützschenkel (13) verläuft.

## Beschreibung

Die Erfindung betrifft einen Aufbau für ein Reisemobil gemäß dem Oberbegriff des Anspruchs 1.

Bei bekannten Aufbauten von Reisemobilen o.dgl. ist im heckseitigen Bereich von parallelen Längsholmen des Fahrgestells ein zusätzliches Anbaugestell vorgesehen (US 2,794,650). In diesem Verbindungsbereich ist eine mehrteilige Verbindungsvorrichtung mit vertikalen Tragteilen festgelegt, die einerseits über aufwendige Verbindungsteile am Längsholm fixiert sind und am unteren Ende durch Querverbindungsteile, insbesondere Schraubverbindungen, die Tragholme des abgesenkten hinteren Anbaugestells erfassen. Diese Verbindungskonstruktion ist durch die Vielzahl von Bauteilen aufwendig, weist ein hohes Gewicht auf und durch die rechtwinklige Bauteilgestaltung treten Kerbwirkungen auf, mit denen insbesondere bei hohen Gewichtslasten die Stabilität eingeschränkt ist. Gemäß US 3,088,750 ist ein Fahrgestell vorgesehen, das durch jeweilige quer zur Fahrtrichtung an den Längsholmen angreifende Querträger erweitert ist. In DE 203 12 500 U1 wird ein Anbauchassis für einen motorisierten Zugkopf vorgeschlagen, wobei die Längsträger des Fahrgestells durch gleichebenig verlaufende Trägerteile verlängert sind, die mittels jeweiliger seitlicher Stützbleche und Schraubverbindungen fixiert sind.

Die Erfindung befaßt sich mit dem Problem, einen Aufbau für ein Reisemobil zu schaffen, der im Verbindungsbereich zu dem heckseitig als Verlängerung vorgesehenen Anbaugestell besonders bruchstabil ist, in Quer- und Längsrichtung eine verbesserte Aussteifung auch des Fahrgestells bewirkt und mit insgesamt geringerem Bauteilgewicht kostengünstig ausführbar ist.

Die Erfindung löst diese Aufgabe mit einem Aufbau für ein Reisemobil gemäß dem Anspruch 1. Weitere vorteilhafte Ausgestaltungen ergeben sich aus den Ansprüchen 2 bis 10.

Das erfindungsgemäße Reisemobil ist im Bereich seines heckseitigen Aufbaus dadurch verbessert, daß die zwischen den Längsholmen des Fahrgestells und dem Anbaugestell vorgesehenen Verbindungsvorrichtungen als eine funktionale Baugruppe stabiler ausgeführt und dazu mit einem Profilträger versehen sind, der in Längsrichtung des Fahrzeuges eine konturierte, im wesentlichen kerbwirkungsfreie und damit langzeitstabilere Tragstruktur bildet.

Dieser Profilträger ist mit einem vom Fahrgestell ausgehend nach unten geneigten Stützschenkel versehen, wobei dessen Neigung entsprechend der Aufbaugestaltung so gewählt ist, daß die Gewichtslasten des auf dem Anbaugestell befindlichen Aufbaus besonders stabil aufgenommen werden können, mit dem Profilkörper Kerbwirkungen verursachende Übergangsbereiche zwischen Längsholm und Tragholm vermieden sind und damit in Einbaulage der zumindest zwei gegenüberliegenden Baugruppen die Stabilität sowohl des Chassis im Bereich der Längsholme als auch des über den beiden Tragholmen befindlichen Anbaugestells insgesamt verbessert sind.

Der Profilträger kann dabei in weitgehend beliebiger Ausführung als ein einstückiges Bauteil ausgeführt sein, entsprechend vorgesehener Leichtbauweise auch aus Plattenteilen zusammengesetzt oder auch in Form eines abgekanteten Hohlprofilteiles bereitgestellt werden. Insbesondere ist vorgesehen, daß an jedem der als Hohlprofilteile ausgeführten Längsholme zwei im wesentlichen zu deren Längsmittelebene parallele Profilträger in Form konturierter Plattenteile vorgesehen sind, wobei deren Tragschenkel an seinem vorderen und hinteren Ende jeweilige längsgerichtete Verbindungsschenkel aufweist, die in den Längsholm des Fahrgestells bzw. den Tragholm des Anbaugestells einführbar und hier fixierbar sind. Damit ist eine hochbelastbare Tragstruktur erreicht, die mit geringem technischen Aufwand an weitgehend beliebige Abmessungen von Reisemobilen anpaßbar ist.

Weitere Einzelheiten und vorteilhafte Ausgestaltungen der Erfindung ergeben sich aus der nachfolgenden Beschreibung und den Zeichnungen, die ein Ausführungsbeispiel des erfindungsgemäßen Reisemobilaufbaus mit dem Profilträger veranschaulichen. In der Zeichnung zeigen:
- Fig. 1: eine teilweise geschnittene Seitenansicht eines Reisemobilaufbaus gemäß dem Stand der Technik, mit an Längsholmen eines Fahrgestells durch Verbindungsvorrichtungen gehaltenem Anbaugestell,
- Fig. 2.: eine Draufsicht auf die Verbindungsvorrichtungen am Anbaugestell in erfindungsgemäßer Ausführung,
- Fig. 3: eine Perspektivdarstellung der Verbindungsvorrichtungen zwischen Längsholmen und Anbaugestell ähnlich Fig. 2,
- Fig. 4: eine vergrößerte Ausschnittsdarstellung der Verbindungsvorrichtung im Bereich eines Profilträgers,
- Fig. 5: eine perspektivische Einzeldarstellung des erfindungsgemäßen Profilträgers,
- Fig. 6 und Fig. 7: eine jeweilige spiegelbildliche Ausführung der Profilträger mit einem Verbindungsansatz,
- Fig. 8: eine Perspektivdarstellung der beiden verbundenen Profilträger gemäß Fig. 6 und 7,
- Fig. 9: eine Darstellung ähnlich Fig. 3 mit zusätzlichen Bauteilen im Bereich der Längsholme,
- Fig. 10: eine vergrößerte Ausschnittdarstellung einer Verbindungsvorrichtung gemäß Fig. 9, und
- Fig. 11: eine dritte Ausführung des Profilträgers als einstückiges Hohlprofilteil.

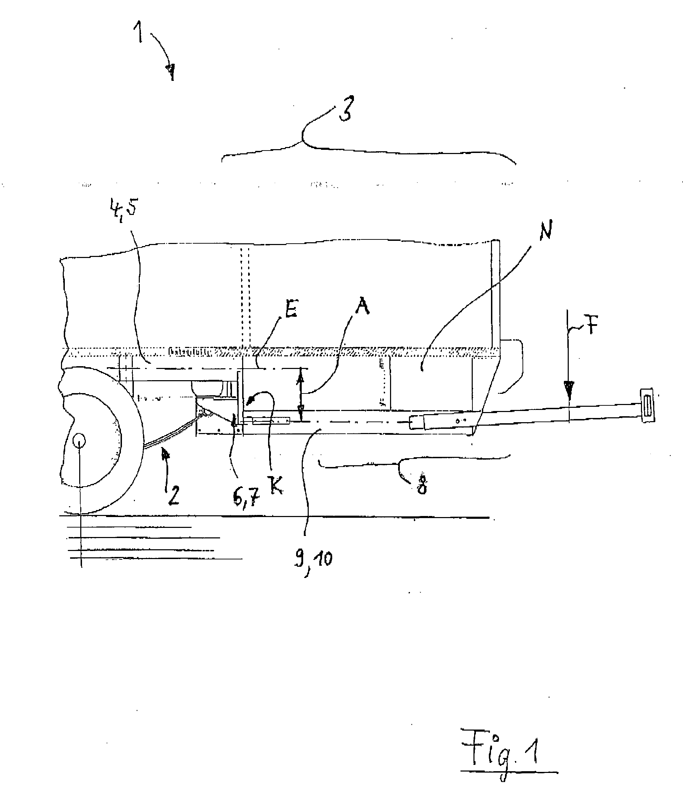

In Fig. 1 ist ein insgesamt mit 1 bezeichnetes Reisemobil dargestellt, dessen Fahrgestell 2 im heckseitigen Bereich mit einem Aufbau 3 erweitert ist. Zur Abstützung dieses Aufbaus 3 ist das Fahrgestell 2 im Bereich von zur Längsmittelebene M des Reisemobils 1 parallelen Längsholmen 4, 5 mit einem durch eine jeweilige Verbindungsvorrichtung 6, 7 gehaltenen Anbaugestell 8 versehen. Bei bekannten Reisemobilaufbauten ist dieses Anbaugestell 8 mit jeweiligen aus der Ebene E der Längsholme 4, 5 in einem Abstand A nach unten abgesenkten Tragholmen 9, 10 versehen. Mit dieser Gestaltung des Anbaugestells 8 soll ein zusätzlicher Nutzraum N entsprechend maximal ausgelegt und für zusätzliche Transportgegenstände eine optimale Aufnahme erreicht werden. Bei derartigen Konstruktionen besteht jedoch die Gefahr, daß durch hohe Gewichtsbelastungen (Pfeil F) und entsprechende Dauerschwingungen im Bereich K der Verbindungsvorrichtungen 6, 7 ein Ermüdungsbruch o. dgl. Beschädigungen zu Umbau- und Reparaturarbeiten führen.

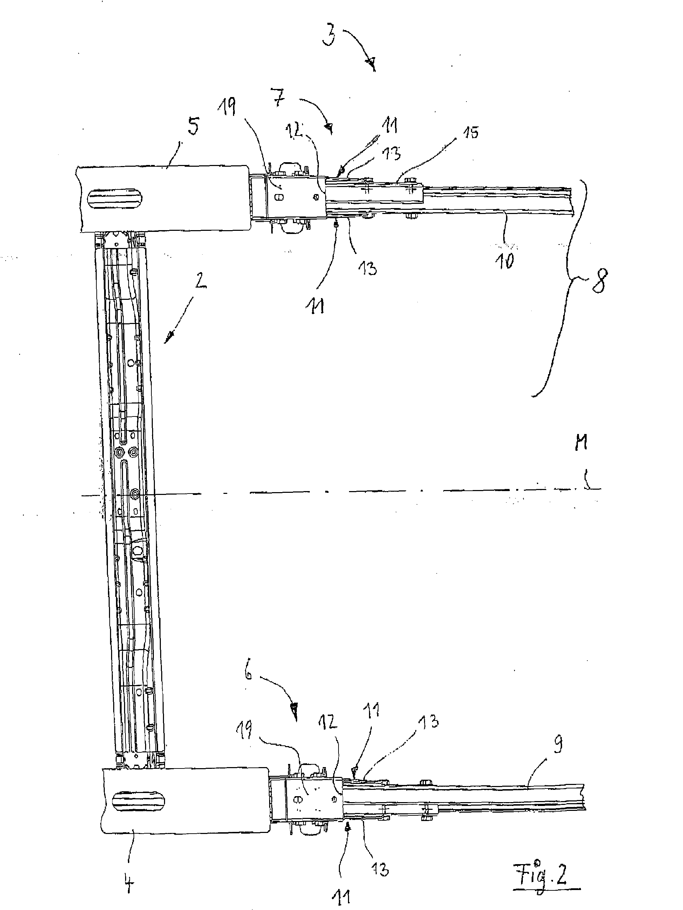

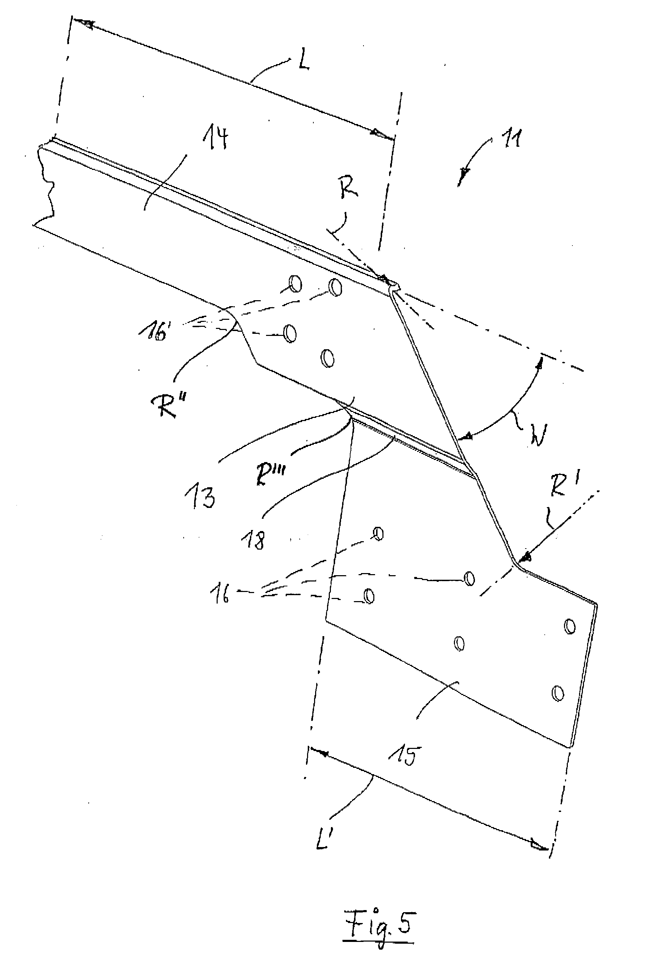

Der Reisemobilaufbau ist in erfindungsgemäßer Ausführung dadurch verbessert, daß die Verbindungsvorrichtungen 6, 7 (Fig. 2) zwischen dem jeweiligen Längsholmen 4, 5 und dem Tragholmen 9, 10 des heckseitigen Anbaugestells 8 mit einem Profilträger 11 (Fig. 5) versehen sind. Dieser Profilträger 11 weist ausgehend vom stirnseitigen Endbereich 12 des Längsholmes 4, 5 zu dem einen vertikalen Abstand A' aufweisenden Tragholmen 9, 10 hin einen Stützschenkel 13 auf, der mit einer einen Schrägungswinkel W definierenden Kontur geformt ist.

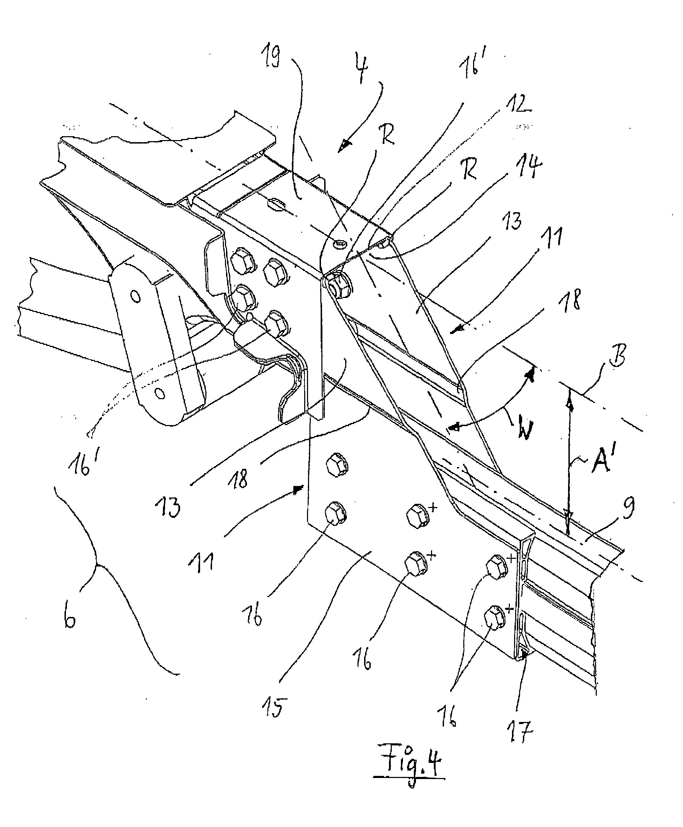

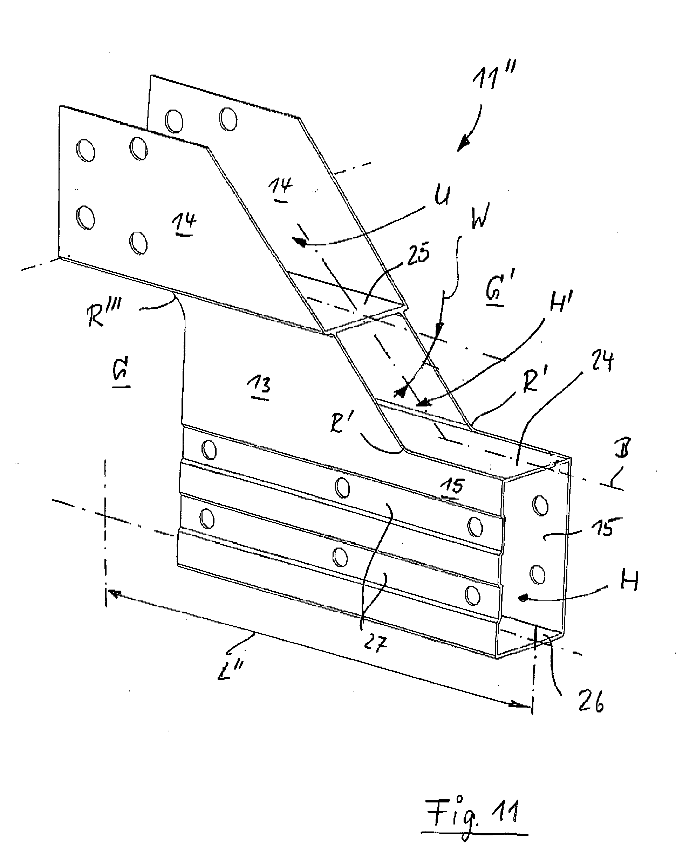

Die Zusammenschau von Fig. 4 und 5 verdeutlicht, daß der Profilträger 11 in seiner Längskontur einen mit einer Neigung W von 30° bis 60°, vorzugsweise 45° zwischen dem Längsholm 4 und dem Tragholm 9 verlaufenden Stützschenkel 13 definiert. In zweckmäßiger Ausführung ist der Profilträger 11 als ein einstückiges Bauteil (Fig. 5) ausgeführt, wobei ebenso denkbar ist, den Stützschenkel 13 durch jeweilige Einzelbauteile zu dem konturierten Profilträger 11 zu komplettieren oder diesen an Stelle der plattenförmigen Ausführung als ein abgekantetes Blechteil (nicht dargestellt), Hohlprofilteil (Fig. 11) o. dgl. auszuführen.

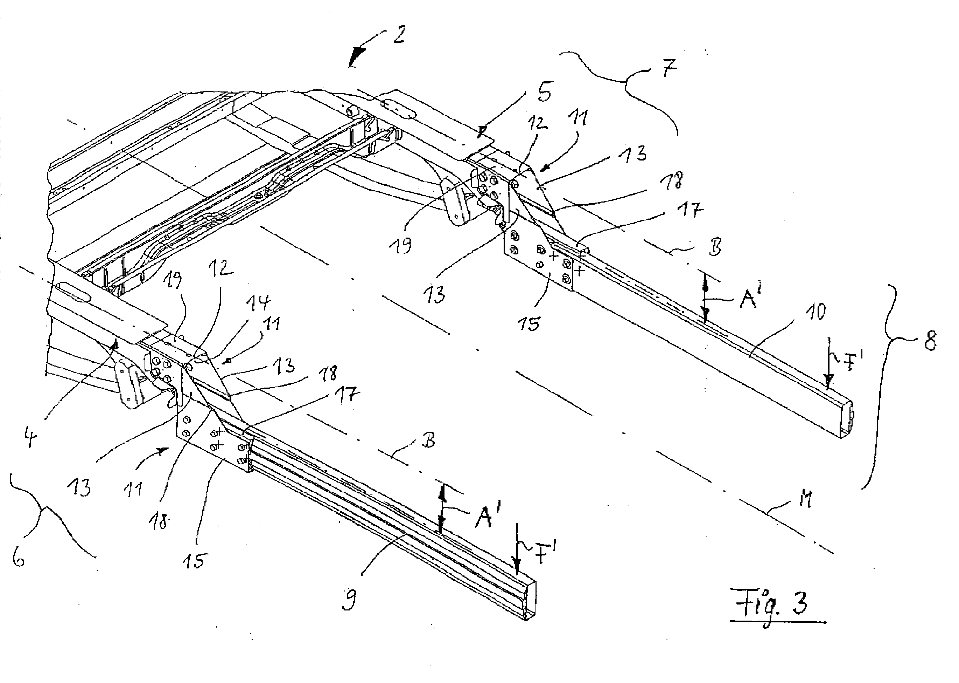

Die Ansichten gemäß Fig. 2 bis 4 verdeutlichen, daß an jedem der Längsholme 4, 5 mehrere, nämlich zwei, der Profilträger 11 vorgesehen sind, wobei diese spiegelbildlich zur Längsmittelebene B der Längsholme 4, 5 fixiert sind und außenseitig ein Zwischenteil 17 einen optimalen Formschluß zum Tragholm 9, 10 bildet. Im Bereich der Längsholme 4, 5 sind die beiden spiegelbildlich ausgeführten Profilträger 11 mit einem den Endbereich 12 bildenden Deckprofilteil 19 versehen, das im wesentlichen U-förmig ausgebildet ist.

Für eine optimale Stütz- und Stabilisierungswirkung des konturierten Profilträgers 11 ist dieser endseitig seines mittigen Stützschenkels 13 einerseits zum jeweiligen Längsholm 4, 5 hin und andererseits zum Anbaugestell 8 hin mit jeweiligen in längsgerichteter Kontur verlaufenden Verbindungsschenkein 14 und 15 versehen. Durch diese Verbindungsschenkel 14, 15 kann der Profilträger 11 am Längsholm 4, 5 und/oder am Tragholm 9, 10 des Anbaugestells 8 form- und kraftschlüssig fixiert werden.

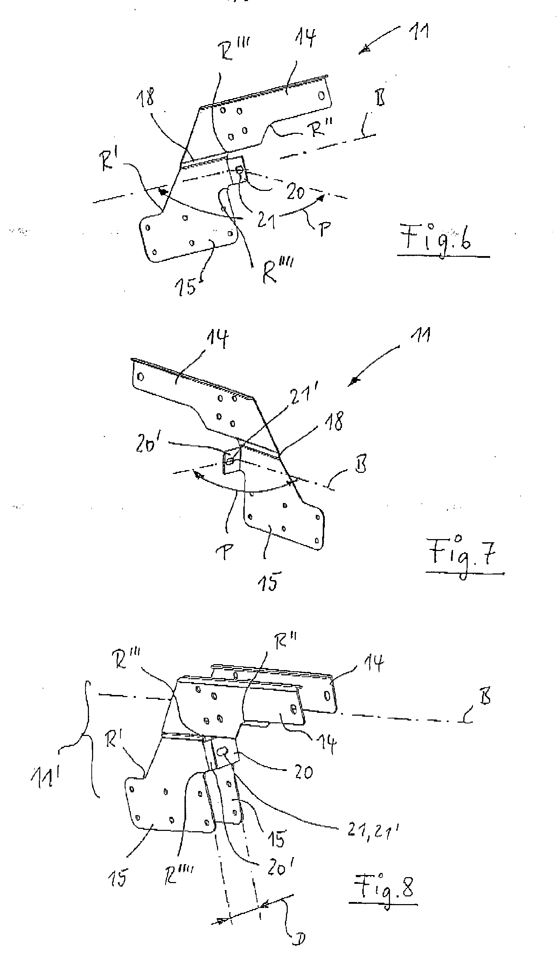

Bei entsprechender Konstruktion der insbesondere als Hohlprofile ausführbaren Gestell-Holme 4, 5 bzw. 9, 10 und angepaßter Bemessung der Verbindungsschenkel 14, 15 mit jeweiligen Längen L, L' (Fig. 5) ist als formschlüssige Verbindung eine Einschub-Montage dieser Schenkel 14, 15 vorgesehen (Fig. 4), derart, daß einerseits mit diesen formschlüssigen Verbindungsbereichen eine optimale Stabilisierung von Fahrgestell 2 und Anbaugestell 8 erreicht wird und andererseits durch entsprechende Einschublängen L die Kontur des Stützschenkels 13 im Bereich zwischen jeweilige Radienkonturen R und R' (Fig. 5) eine kerbwirkungsfreie Abstützung ermöglicht. Diese belastungsoptimalen Konturen sind auch mit jeweiligen Radien R" (Fig. 5), R''' und R"" (Fig. 6 bis 8) erreicht. Der Profilkörper 11 kann zusätzlich im Bereich des Stützschenkels 13 mit einer als Abkantung, Sicke o. dgl. Stabilisierungskontur ausgebildeten Profilierung 18 versehen sein.

Bei der dargestellten Ausführung des Profilträgers 11 ist der jeweilige Verbindungsschenkel 14 in den Längsholm 4 bzw. 5 eingeschoben und durch Schraubverbindungen 16' gehalten. Der Verbindungsschenkel 15 ist außenseitig am jeweiligen Tragholm 9, 10 durch das an diese angelegte Zwischenteil 17 und die Schraubverbindungen 16 fixiert- Denkbar ist auch, daß anstelle der Schraubverbindungen im Bereich der Verbindungsschenkel 14, 15 Schweißverbindungen (nicht dargestellt) vorgesehen sind. Ebenso ist denkbar, daß der Profilkörper 11 mit nach oben gerichteter Neigung W ein über der Ebene E der Längholme 4, 5 befindliches Anbaugestell abstützt (nicht dargestellt).

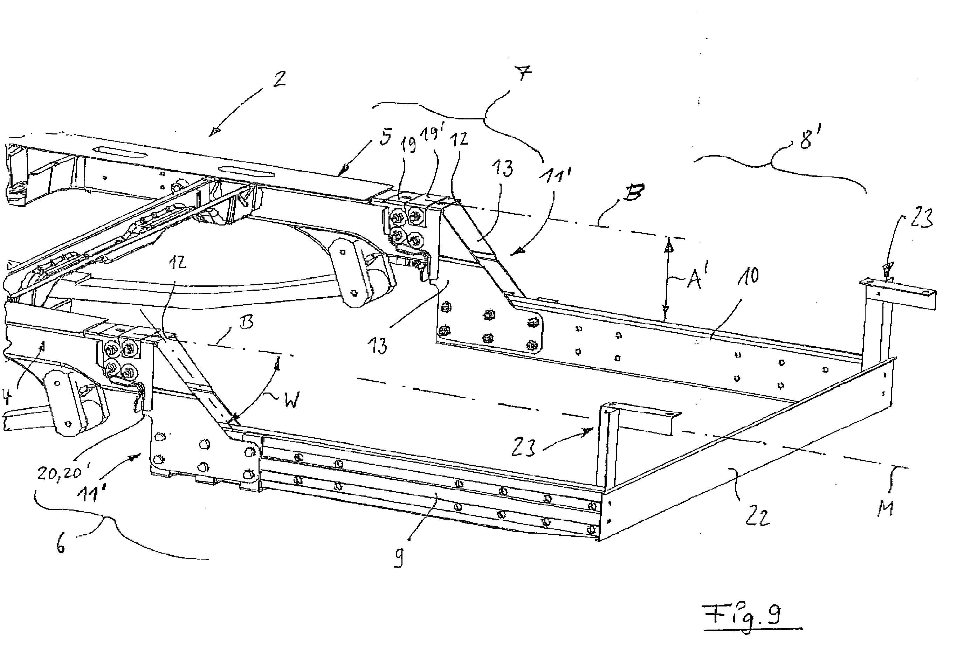

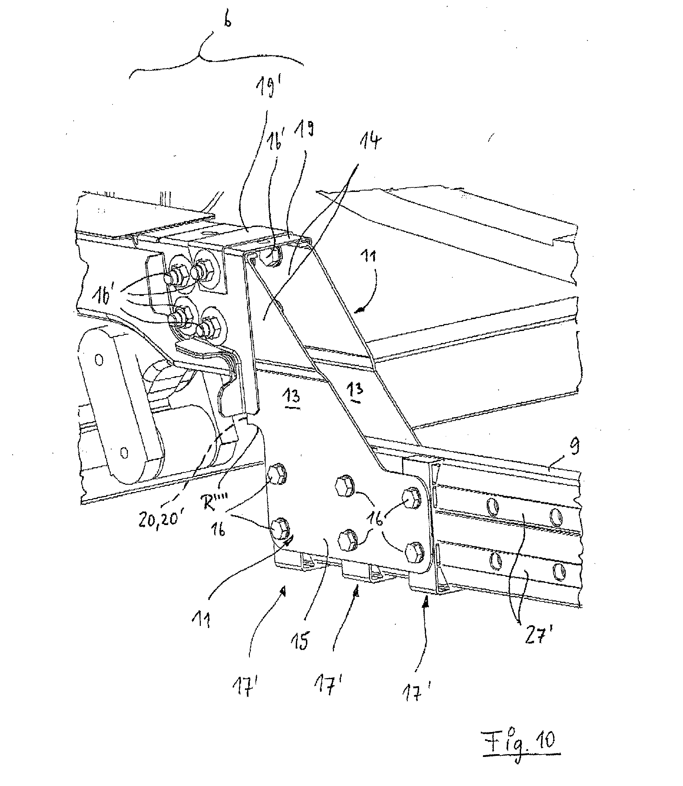

In Fig. 6 bis Fig. 10 ist eine zweite Ausführung der paarweise zusammenwirkenden Profilträger-Teile 11 dargestellt, wobei diese mit jeweiligen Verbindungsansätzen 20, 20' versehen sind. Diese im wesentlichen rechtwinklig (Winkel P) zur jeweiligen Längsachse B verlaufenden Verbindungsansätze 20, 20' können im Bereich einer Durchlaßöffnung 21, 21' durch eine nicht dargestellte Schraubbaugruppe verbunden werden, so daß ein mit 11' bezeichnete Profilträger (Fig. 8) als vormontierte Baugruppe bereitstellbar ist bzw. in die Einbaulage (Fig. 9, Fig. 10) eine zusätzliche Stabilisierung des Systems erreicht wird Ebenso ist denkbar, die Ansätze 20, 20' durch eine Schweißverbindung zu fixieren. Vorteilhaft sind die Durchlaßöffnungen 21, 21' als Langlöcher ausgebildet, so daß ein Abstandsmaß D zwischen den beiden Schenkeln 15 einstellbar ist.

In Fig. 9 und 10 sind weitere Details des Anbaugestells 8' dargestellt, wobei im Bereich der Schraubverbindungen 16 (Fig. 10) als Zwischenteile 17' mehrere Anlageprofile vorgesehen sind und das Deckprofilteil 19 im Bereich der Schenkel 14 von einem zusätzlichen Stützteil 19' übergriffen ist, das mittels der oberen Schrauben 16' gehalten wird. Am freien Ende der beiden Tragholme 9, 10 ist in der Ausführung des Anbaugestells 8' gemäß Fig. 9 ein Querträger 22 vorgesehen und in den hinteren Eckbereichen ist jeweils ein zusätzliche Tragwinkel 23 abgestützt.

In Fig. 11 ist eine dritte Ausführung eines Profilträgers 11" dargestellt, wobei dieser als ein einstückiges Hohlprofilteil ausgebildet ist. Ausgehend von einem als Strangprofil gezogenen Halbzeug wird das eine Länge L" aufweisende Hohlprofilteil abgetrennt und durch beispielsweise Fräsen o. dgl. Bearbeitungsverfahren werden die Bereiche G und G' so ausgearbeitet, daß die Neigungs- und Radienkonturen W, R, R"' im Bereich der Schenkel 13, 14, 15 erreicht sind. Wesentlich für die Stabilität dieses Profilträgers 11" sind jeweilige Kanäle H, H' bzw. ein Profilbereich U, die durch jeweilige Querwände 24, 25, 26 eine U-förmige bzw. geschlossene Kontur bilden. Dieses Tragwerk kann damit durch optimale Bauteilstabilität auch in Leichtbauweise, insbesondere als eine dünnwandige und gewichtssparende Aluminium-Konstruktion, ausgeführt werden. Im Bereich der Schenkel 15 weist der Profilträger 11" längslaufende Sickerprofilierungen 27 auf, die eine zusätzliche Stabilisierung bewirken und in der Montagestellung jeweilige Längsprofile 27' im Bereich der Tragholme 9, 10 optimal aufnehmen (Fig. 10).

## Patentansprüche

1. Aufbau für ein Reisemobil (1), dessen Fahrgestell (2) endseitig im Bereich von zur Längsmittelebene (M) parallelen Längsholmen (4, 5) mit einem durch eine jeweilige Verbindungsvorrichtung (6, 7) gehaltenen Anbaugestell (8) versehen ist, dessen aus der Ebene (E) der Längsholme (4, 5) nach unten abgesenkte Tragholme (9, 10) einen zusätzlichen Nutzraum (N) o. dgl. untergreifen, **dadurch gekennzeichnet, daß** die jeweilige Verbindungsvorrichtung (6, 7) zwischen Längsholm (4, 5) und Tragholm (9, 10) mit zumindest einem Profilträger (11, 11') versehen ist, der ausgehend vom stirnseitigen Endbereich (12) des Längsholmes (4, 5) zu dem einen vertikalen Abstand (A') aufweisenden Tragholm (9, 10) hin mit einem einen Schrägungswinkel (W) definierenden Stützschenkel (13) verläuft.

2. Reisemobilaufbau nach Anspruch 1, **dadurch gekennzeichnet, daß** der Profilträger (11) in seiner Längskontur einen mit einer 45°-Neigung zwischen Längsholm (4, 5) und Tragholm (9,10) verlaufenden Stützschenkel (13) definiert.

3. Reisemobilaufbau nach Anspruch 1 oder 2, **dadurch gekennzeichnet, daß** der Profilträger (11) als ein einstückiges Bauteil ausgebildet ist.

4. Reisemobilaufbau nach einem der Ansprüche 1 bis 3, **dadurch gekennzeichnet, daß** an jedem der Längsholme (4, 5) mehrere zu den Tragholmen (9, 10) des Anbaugestells (8) gerichtete Profilträger (11) vorgesehen sind.

5. Reisemobilaufbau nach einem der Ansprüche 1 bis 4, **dadurch gekennzeichnet, daß** der Profilträger (11) endseitig seines mittigen Stützschenkels (13) einerseits zum Längsholm (4, 5) hin und andererseits zum Anbaugestell (8) hin jeweils einen als längsgerichtete Kontur verlaufenden Verbindungsschenkel (14,15) aufweist.

6. Reisemobilaufbau nach einem der Ansprüche 1 bis 5, **dadurch gekennzeichnet, daß** der Profilträger (11) am Längsholm (4, 5) und/oder am Tragholm (9, 10) des Anbaugestells (8) formschlüssig durch den jeweiligen Verbindungsschenkel (14) gehalten ist.

7. Reisemobilaufbau nach Anspruch 6, **dadurch gekennzeichnet, daß** zumindest der obere der Verbindungsschenkel (14) des Profilträgers (11) in den Längsholm (4, 5) eingeschoben ist.

8. Reisemobilaufbau nach einem der Ansprüche 1 bis 7, **dadurch gekennzeichnet, daß** der untere und der obere Verbindungsschenkel (14, 15) in den Längsholm (4, 5) bzw. den Tragholm (9,10) eingeschoben sind.

9. Reisemobilaufbau nach einem der Ansprüche 1 bis 8, **dadurch gekennzeichnet, daß** der Profilträger (11) durch eine Schraub- und/oder Schweißverbindung(en) (16; 16') am Längsholm (4, 5) bzw. am Tragholm (9,10) gehalten ist.

10. Reisemobilaufbau nach einem der Ansprüche 1 bis 9, **dadurch gekennzeichnet, daß** der Profilträger (11) von außen an den Längsholm (4, 5) bzw. den Tragholm (9, 10) angelegt und über Verbindungsmittel (16; 16') fixiert ist.
